# EUROPEAN PATENT APPLICATION

(11) **EP 2 360 972 A1**
(43) Date of publication of application: **24.08.2011**
(21) Application number: 09833366.9
(22) Date of filing: 09.12.2009
(51) Int. Cl.: H04W 48/16, H04W 28/18, H04W 36/26

(54) **WIRELESS COMMUNICATIONS SYSTEM, BASE STATION, METHOD OF COMMUNICATING WIRELESSLY, AND PROGRAM**

(30) Priority: 18.12.2008 JP 2008322646
(71) Applicant: NEC Corporation, Minato-ku Tokyo 108-8001 (JP)
(72) Inventor: TSURUNO, Makoto, Tokyo 108-8001 (JP)
(74) Representative: Glawe, Delfs, Moll
(86) International application number: PCT/JP2009/070599
(87) International publication number: WO 2010/071062

(57) **Abstract**

A base station of the present invention includes: a bandwidth information notifier that exchanges information on unoccupied bandwidth in the allocatable bandwidth to the terminal under control which, among terminals, belongs to a QoS class that needs bandwidth guarantee, with neighboring base stations; and a candidate selector that, when the base station is the originating base station of the terminal under control, predicts whether the terminal under control is determined as being unaccommodatable by each neighboring base station, based on the unoccupied bandwidth of the neighboring base station, and excludes the neighboring base station that was predicted to be determined as being unable to accommodate the terminal under control from the candidates of target base stations of the terminal under control.

## Description

### Technical Field

The present invention relates to a radio communication system, base station, radio communication method and program.

### Background Art

In the WiMAX (Worldwide Interoperability for Microwave Access) Forum, WiMAX has been formulated based on the IEEE (Institute of Electrical and Electronic Engineers) 802.16e standard. A WiMAX radio communication system is disclosed in Patent Document 1, for example.

In the WiMAX radio communication system, transmission and reception of data is performed in sub-frame (Sub-frame) units. An OFDMA (Orthogonal Frequency Division Multiple Access) scheme is adopted as the multiple access scheme, while a TDD (Time Division Duplex) scheme is adopted as the duplex scheme.

The OFDMA scheme is a scheme in which the band is sectioned into subchannels with respect to the frequency direction and in which the time is sectioned into symbols with respect to the time direction and the thus sectioned areas are assigned in slot units to MS (Mobile Stations) as terminals.

The TDD scheme is a scheme in which the DL (Down Link) link and UL (Up Link) link between BS (Base Station) and MS use the same frequency, and DL sub-frames and UL sub-frames are changed over along the time axis.

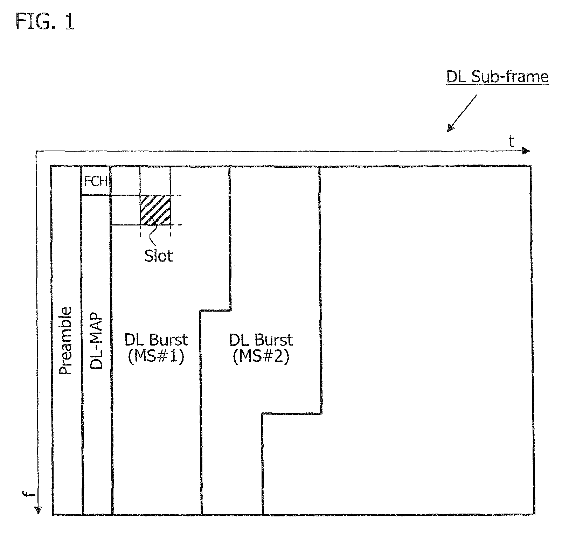

Referring not to FIG. 1, a schematic structure of a sub-frame in a WiMAX radio communication system will be described. Herein, description will be given by taking an example of a DL sub-frame.

A DL sub-frame is provided at first with a Preamble area including a Pilot signal and a MAP area including signals that indicate allocation of slots to each MS, and the following area (DL Burst) after this is allotted to each MS as bandwidths for transmitting data.

The WiMAX radio communication system supports an adaptive modulation scheme. The adaptive modulation scheme is a scheme in which a BS adaptively changes the modulation scheme and coding rate of data according to MS channel environment. When, for example, a MS performs handover from the serving BS, that is an originating base station to the target BS, that is a handover-target base station, adaptive modulation is performed at the target BS. In WiMAX, data transmission speed is defined according to the combination of the modulation scheme and the coding rate, and this data transmission speed is called the physical rate.

Further, the WiMAX radio communication system also supports QoS (Quality of Service) classes. That is, the WiMAX radio communication system provides bandwidth guarantee for MSs belonging to specific QoS classes such as UGS (Unsolicited Grant Service), ERT-VR (Extended Real Time-Variable Rate Service), RT (Real TimE)-VR and NRT (Non Real Time)-VR.

Here, the relationship between adoptive modulation and bandwidth guarantee will be described.

The number of bytes necessary for one slot in a sub-frame, while performing bandwidth guarantee, differs depending on the combination of the modulation scheme and the cording rate, the number of bytes is low in a case of a low physical rate combination. For example, 6 bytes are needed for a case of low-physical rate QPSK (Quadrature Phase Shift Keying) 1/2 (the first part indicates a modulation scheme and the second part indicates a coding rate. The same apples hereinbelow) while 12 bytes are needed for a case of high-physical rate 16QAM (Quadrature Amplitude Modulation) 1/2.

In other words, the number of slots to be needed for bandwidth guarantee becomes greater in the case of low-physical rate combinations. For example, when a MS transmits data of 120 bytes per sub-frame, 20 slots are needed in the case of low-physical rate QPSK 1/2, whereas 10 slots are needed in the case of 16QAM 1/2.

Accordingly, when a BS performs adaptive modulation on a MS belonging to a QoS class that needs bandwidth guarantee, the BS may be short of slots to be allotted to the MS depending on the combination of the modulation scheme and the coding rate so that there is a possibility of the BS being unable to accommodate the MS.

To deal with this problem, in the WiMAX radio communication system, the BS performs control called "admission control" on MSs that belong to QoS classes that need bandwidth guarantee as the control target, among the MS to be subjected to adaptive modulation. Admission control refers to a control for determining whether the subject base station can accommodate a MS to be controlled if the MS is subjected to adaptive modulation.

### Prior Art Documents

### Patent Document

Patent Document 1: JP2007-266719A

### Summary of the Invention

### Problems to be solved by the Invention

As described above, in the WiMAX radio communication system, upon handover of a MS, the target BS performs admission control on the MS when implementing adaptive modulation on the MS if the MS belongs to a QoS class that needs bandwidth guarantee.

At this time, there occurs a case in which the MS is determined to be unaccommodatable by admission control of the target BS after the MS has started a handover operation such as setting of radio resources etc. with the target BS. In this case, since connection of the MS to the target BS is rejected and handover results in failure, there occurs the problem that the MS has to perform handover operation again with another target BS.

The object of the invention is to solve the above problem and to provide a radio communication system, base station, radio communication method and program whereby it is possible to reduce the occurrence of handover failure due to limitations of admission control by the target BS upon handover of a MS.

### Means for Solving the Problems

The radio communication system of the present invention is radio communication system comprising terminals and base stations which, at the time of handover of a terminal under control which, among the terminals, belongs to a QoS (Quality of Service) class that needs bandwidth guarantee, perform, when the base station is the target base station of the terminal under control, admission control of determining whether the base station can accommodate the terminal under control when adaptive modulation is implemented, wherein
the base station includes:
a bandwidth information notifier that exchanges information on unoccupied bandwidth in the allocatable bandwidth to the terminal under control, with neighboring base stations; and,
a candidate selector that, when the base station is the originating base station of the terminal under control, predicts whether the terminal under control is determined as being unaccommodatable by each neighboring base station, based on the unoccupied bandwidth of the neighboring base station, excludes the neighboring base station that was predicted to be determined as being unable to accommodate the terminal under control, from among the candidates of target base stations of the terminal under control.

The base station of the present invention is a base station which, at the time of handover of a terminal under control which, among terminals, belongs to a QoS class that needs bandwidth guarantee, performs, when the base station is the target base station of the terminal under control, admission control of determining whether the base station can accommodate the terminal under control when adaptive modulation is implemented, comprising:
a bandwidth information notifier that exchanges information on unoccupied bandwidth in the allocatable bandwidth to the terminal under control, with neighboring base stations; and,
a candidate selector that, when the base station is the originating base station of the terminal under control, predicts whether the terminal under control is determined as being unaccommodatable by each neighboring base station, based on the unoccupied bandwidth of the neighboring base station, and excludes the neighboring base station that was predicted to be determined as being unable to accommodate the terminal under control, from among the candidates of target base stations of the terminal under control.

The radio communication method of the present invention is a radio communication method based on a base station which, at the time of handover of a terminal under control which, among terminals, belongs to a QoS class that needs bandwidth guarantee, performs, when the base station is the target base station of the terminal under control, admission control of determining whether the base station can accommodate the terminal under control when adaptive modulation is implemented, comprising:
a bandwidth information notifying step of exchanging information on unoccupied bandwidth in the allocatable bandwidth to the terminal under control, with neighboring base stations; and,
a candidate selecting step of, when the base station is the originating base station of the terminal under control, predicts whether the terminal under control is determined as being unaccommodatable by each neighboring base station, based on the unoccupied bandwidth of the neighboring base station, leaving out the neighboring base station that was predicted to be determined as being unable to accommodate the terminal under control, from among the candidates of target base stations of the terminal under control.

The program of the present invention causes a base station which, at the time of handover of a terminal under control which, among terminals, belongs to a QoS class that needs bandwidth guarantee, performs, when the base station is the target base station of the terminal under control, admission control of determining whether the base station can accommodate the terminal under control when adaptive modulation is implemented, to execute:
a bandwidth information notifying procedure of exchanging information on unoccupied bandwidth in the allocatable bandwidth to the terminal under control, with neighboring base stations; and,
a candidate selecting procedure of, when the base station is the originating base station of the terminal under control, predicts whether the terminal under control is determined as being unaccommodatable by each neighboring base station, based on the unoccupied bandwidth of the neighboring base station, leaving out the neighboring base station that was predicted to be determined as being unable to accommodate the terminal under control, from among the candidates of target base stations of the terminal under control.

### Effect of the Invention

In the present embodiment, it is possible obtain the effect in which the occurrence of handover failure due to limitations of admission control by the target base station can be reduced when a terminal performs handover.

### Brief Description of the Drawings

FIG. 1 its a diagram for illustrating a DL sub-frame structure in WiMAX.
FIG. 2 is a block diagram showing a radio communication system configuration of one exemplary embodiment of the present invention.
FIG. 3 is a block diagram showing one example of a configuration of the base station shown in FIG. 2.
FIG. 4 is a diagram for illustrating an unoccupied bandwidth in a reserved bandwidth, which the base station shown in FIG. 2 exchanges notification with neighboring base stations.
FIG. 5 is a flow chart for explaining one example of the operation of the base station shown in FIG. 2.

### Mode for Carrying Out the Invention

Now, the best mode for carrying out the present invention will be described with reference to the drawings.

In the following exemplary embodiment, description will be made taking an example in which the radio communication system is a WiMAX radio communication system. However, the present invention should not be limited to this.

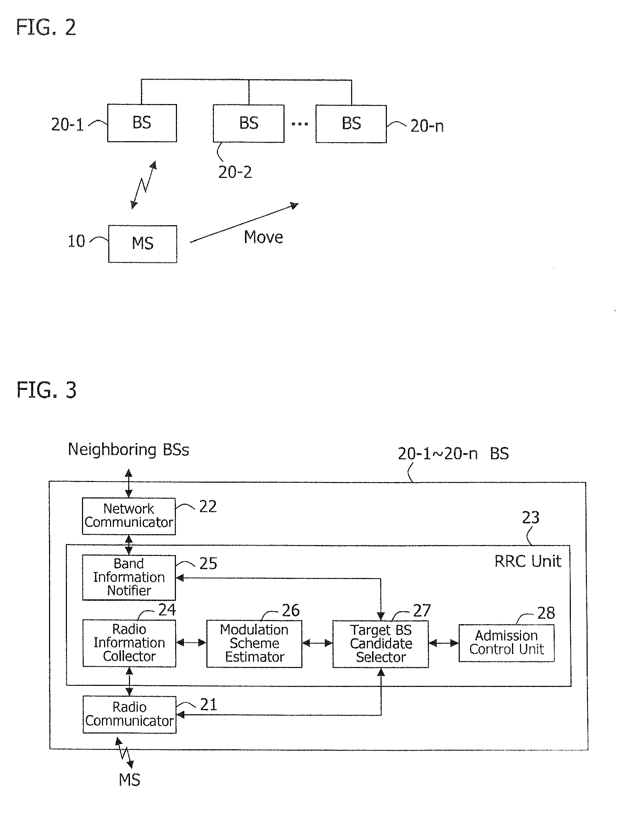

As shown in FIG. 2, the radio communication system of the present exemplary embodiment includes terminal (which will be referred to hereinbelow as "MS") 10 and base stations (which will be referred to hereinbelow as "BS") 20-1∼20-n. Here, to make the description simple, in FIG. 2, the number of MS 10 is only one, but the present invention should not be limited to this.

MS 10 is a terminal belonging to a QoS class that needs bandwidth guarantee, and performs radio communication with BSs 20-1∼20-n.

BSs 20-1∼20-n are base stations that perform radio communication with MS 10. Here, BSs 20-1∼20-n are connected to each other via an unillustrated network.

As shown in FIG. 3, BS 20-1∼20-n includes radio communicator 21, network communicator 22 and RRC (Radio Resource Controller) unit 23.

RRC unit 23 includes radio information collector 24, bandwidth information notifier 25, modulation scheme estimator 26, target BS candidate selector 27 and admission control unit 28.

Here, FIG. 3 only shows essential constituents of the present invention, among the components of BSs 20-1-20-n, with other constituents omitted.

Radio communicator 21 performs radio communication with MS 10.

Network communicator 22 performs network communication with BSs other than its own station.

When the subject base station is the serving BS of MS 10, radio information collector 24 collects radio information on quality of ratio communication performed between MS 10 and neighboring BSs, via radio communicator 21 from MS 10.

In the present exemplary embodiment, the radio information is assumed to be RSSI (Received Signal Strength Indication: received field strength) and CINR (Carrier to Interference plus Noise Ratio: signal to interference noise ratio) of the signals that MS 10 receives from neighboring BSs. However, the present invention should not be limited to this.

Band information notifier 25 notifies neighboring BSs of information on the band with each other via network communicator 22.

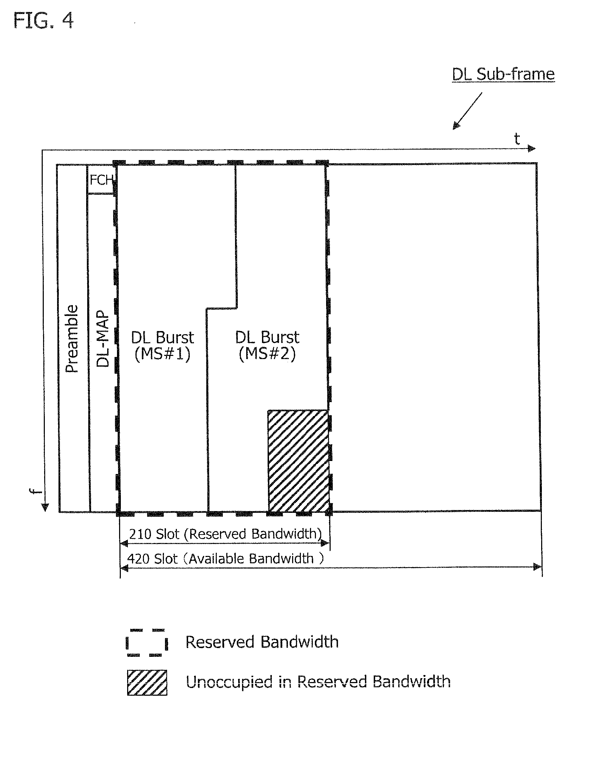

Herein, the information that bandwidth information notifier 25 notifies will be described with reference to FIG. 4. Here, description will be made taking an example of a DL sub-frame. It is assumed that the state of the DL sub-frame of FIG. 4 is the same as that of FIG. 1.

In the present exemplary embodiment, the bandwidth to be allocated to MS that belongs to a QoS class that needs bandwidth guarantee in the DL sub-frame is set up by a parameter (Admission Threshold) of admission control.

For example, the communication conditions of the radio communication system is assumed as follows.

### (Conditions)

- The frequency bandwidth to be used in the radio communication system = 10 MHz
- The symbol ratio between DL sub-frame and UL sub-frame, DL:UL = 29:18
- Admission Threshold = 50%

In this case, the bandwidth available to be allotted to MS is 420 slots. The bandwidth to be allotted to MS that belongs to a QoS class that needs bandwidth guarantee is 210 slots (=420 slots * 50%). Hereinbelow, the bandwidth to be allotted to the MS that belongs to QoS class that needs bandwidth guarantee is called "the reserved bandwidth".

The reason for limiting the reserved bandwidth in the above way is that if all the available bandwidth is used as the reserved bandwidth, it will be impossible to perform adaptive modulation on combination of a low physical rate modulation scheme and a coding rate (because of the need of a greater number of slots) if the radio condition for a certain MS has become worse, hence there is a risk of communication being unacceptable. Leaving the difference of the reserved bandwidth from all the available bandwidth (in the above example, 420-210=210 slots) as the margin for adaptive modulation, makes it possible to perform adaptive modulation on combination of a low physical rate modulation scheme and a coding rate if the radio condition has become worse.

In the present embodiment, bandwidth information notifier 25 exchanges information on the unoccupied bandwidth capable of being allotted to MS belonging to a QoS class that needs bandwidth guarantee, i.e., the unoccupied bandwidth in the reserved bandwidth, with neighboring BSs. As a notification method, it is possible to transmit the information by inserting the information into Spare Capacity Report messages that are exchanged between neighboring BSs, for example. However, the present invention should not be limited to this.

When the subject base station is the serving BS of MS 10, modulation scheme estimator 26, based on the RSSI and CINR information, for each neighboring BS, estimates the combination of the modulation scheme and the coding rate of every neighboring BS when the neighboring BS will be the target BS of MS 10. As the estimation method in this case, a table that associates RSSI and CINR with combinations of a modulation scheme and a coding rate may be held in advance so as to perform estimation that refers to this table. However, the present invention should not be limited to this.

When the subject base station is the serving BS of MS 10, target BS candidate selector 27 predicts, for each neighboring BS, whether MS 10 will be determined to be unaccommodatable under admission control of each neighboring BS, based on the information on unoccupied bandwidth in the reserved bandwidth of the neighboring BS. At this time, target BS candidate selector 27 operates on the assumption that the neighboring BSs perform adaptive modulation based on the combination of the modulation scheme and coding rate estimated by modulation scheme estimator 26.

Then, target BS candidate selector 27 excludes the neighboring BSs which were predicted as those which would be determined as not being able to accommodate MS 10, and notices MS 10 of finally remaining target BS candidates.

Thereafter, MS 10 will perform handover to one of the target BS candidates which were notified by the serving BS.

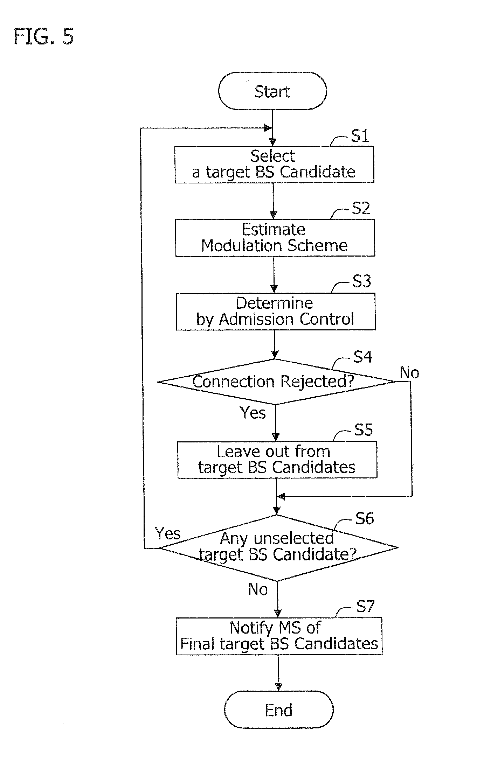

Referring next to FIG. 5, the operation of BS20-1, when BS20-1 is the serving BS of MS 10, will be described in the radio communication system of the present exemplary embodiment.

It is assumed herein that there are BSs 20-2∼20-n as the neighboring BSs of BS 20-1. It is also assumed that BS 20-1 exchanges information on unoccupied bandwidth in the reserved bandwidth with neighboring BSs 20-2∼20-n.

To begin with, at Step S1, target BS candidate selector 27 selects one neighboring BS from among the target BS candidates of neighboring BSs 20-2∼20-n. In this case, it is assumed that neighboring BS20-2 is selected first.

Next, at Step S2, modulation scheme estimator 26, based on information on RSSI and CINR of neighboring BS 20-2, estimates the combination of a modulation scheme and a coding rate when neighboring BS 20-2 becomes the target BS of MS 10.

Next, at Step S3, target BS candidate selector 27 predicts whether MS 10 will be determined to be unaccommodatable as a result of admission control at neighboring BS 20-2 and connection to MS 10 will be rejected, based on the information on unoccupied bandwidth in the reserved bandwidth of neighboring BS 20-2, on the assumption that adaptive modulation is implemented in combination of the modulation scheme and coding rate estimated by modulation scheme estimator 26.

At Step S4, when it was estimated that connection to MS 10 would be rejected by neighboring BS 20-2, target BS candidate selector 27 excludes neighboring BS 20-2 from among the target BS candidates at Step S5.

On the other hand, at Step S4, when it was estimated that connection to MS 20 would be permitted by neighboring BS 20-2, target BS candidate selector 27 leaves neighboring BS 20-2 as it is, without omitting BS 20-2.

Next, at Step S6, target BS candidate selector 27 returns to Step S1 if there is any unselected neighboring BS among the target BS candidates.

Therefore, it is determined whether each of all the neighboring BSs 20-2∼20-n should be excluded from target BS candidates.

Thereafter, at Step S7, target BS candidate selector 27 gives notice of the finally remaining target BS candidates to MS 10.

Then, MS 10 will select one of the target BS candidates notified by BS 20-1 as the target BS and perform handover.

As described above, in the above exemplary embodiment, BSs 20-1∼20-n exchange information on unoccupied bandwidth in the reserved bandwidth with neighboring BSs. When one BS is the serving BS of MS 10, the BS predicts whether MS 10 will be determined to be unaccommodatable as a result of admission control of each neighboring BS, based on the information on unoccupied bandwidth in the reserved bandwidth of each neighboring BS, and excludes the neighboring BS that is determined as being unable to accommodate, from among the target BS candidates of MS 10.

In this way, not information on unoccupied bandwidth in the available bandwidth, but information on unoccupied bandwidth in the reserved bandwidth that is being actually used under admission control is exchanged between neighboring BSs, so that it is possible to precisely predict whether MS 10 will be determined as being unaccommodatable under admission control of neighboring BSs.

Further, since the neighboring BSs that were predicted to be determined as being unable to accommodate MS 10 are excluded from among the target BS candidates, it is possible to reduce the occurrence of handover failure due to limitation of admission control of the target BS at the time of handover of MS 10.

In the present exemplary embodiment, if BS 20-1∼20-n is the serving BS of MS 10, the BS estimates the combination of the modulation scheme and the coding rate for each neighboring BS when the neighboring BS would be the target BS of MS 10, based on the radio information on the quality of the radio communication between the neighboring BS and MS 10 and performs the above prediction on the assumption that adaptive modulation will be performed by the estimated combination.

In this way, prediction is performed on the assumption that adaptive modulation will be performed by the combination of the modulation scheme and the coding rate estimated based on the radio information on the quality of the radio communication between the neighboring BS and MS 10, hence it is possible to perform prediction with a higher precision.

Further, when a neighboring BS becomes the target BS as a result of handover of MS 10, the BS generates a service flow between itself and MS 10. In the neighboring BS, if it is presumed that at the time of generation of this service flow, adaptive modulation is performed by QPSK 1/2, which is the lowest physical rate, the necessary reserved bandwidth becomes large, hence the risk of receiving the limitations of admission control. However, if it has been estimated that the combination of the modulation scheme and the coding rate at the neighboring BS is a high physical rate, it is also possible for the serving BS to perform control by permitting the neighboring BS to generate a service flow

As the present invention has been described heretofore by referring to the exemplary embodiment, the present invention should not be limited to the above exemplary embodiment. Various changes that will be understood by those skilled in the art can be added to the configurations and details of the present invention within the scope of the present invention.

For example, the present exemplary embodiment was described by taking an example in which the limitations of admission control are determined based on the unoccupied bandwidth in the reserved bandwidth of a DL sub-frame. However, the present invention should not be limited to this. It is also possible to determine the limitations of admission control based on the unoccupied bandwidth in the reserved bandwidth of a UL sub-frame.

Moreover, the method performed at BSs 20-1∼20-n of the present invention may be applied to a program for causing a computer to execute. It is also possible to store the program in a storage medium and also provide the program to the outside by way of a network.

This application claims priority based on Japanese Patent Application 2008-322646 filed on December 18, 2008, and should incorporate all the disclosure thereof herein.

## Claims

1. A radio communication system comprising terminals and base stations which, at the time of handover of a terminal under control which, among the terminals, belongs to a QoS (Quality of Service) class that needs bandwidth guarantee, perform, when the base station is the target base station of the terminal under control, admission control of determining whether the base station can accommodate the terminal under control when adaptive modulation is implemented, wherein
the base station includes:
a bandwidth information notifier that exchanges information on unoccupied bandwidth in the allocatable bandwidth to the terminal under control, with neighboring base stations; and,
a candidate selector that, when the base station is the originating base station of the terminal under control, predicts whether the terminal under control is determined as being unaccommodatable by each neighboring base station, based on the unoccupied bandwidth of the neighboring base station, excludes the neighboring base station that was predicted to be determined as being unable to accommodate the terminal under control, from among the candidates of target base stations of the terminal under control.

2. The radio communication system according to Claim 1, wherein the base station further includes:
a radio information collector that, when the base station is the originating base station of the terminal under control, collects radio information on the quality of radio communication between the terminal under control and the neighboring base stations, from the terminal under control; and
an estimator that, when the base station is the originating base station of the terminal under control, estimates for each neighboring base station the combination of a modulation scheme and a coding rate when the neighboring base station will be the target base station of the terminal under control, based on the radio information on the neighboring base station, and,
the candidate selector, when a neighboring base station will be the target base station of the terminal under control, performs the prediction on the assumption that adaptive modulation will be performed by the combination estimated by the estimator, in the neighboring base station.

3. The radio communication system according to Claim 1 or 2, wherein the radio information collector collects as the radio information, information on CINR (Carrier to Interference plus Noise Ratio) and RSSI (Received Signal Strength Indication) of the signal which the terminal under control received from neighboring base stations, from the terminal under control.

4. A base station which, at the time of handover of a terminal under control which, among terminals, belongs to a QoS class that needs bandwidth guarantee, performs, when the base station is the target base station of the terminal under control, admission control of determining whether the base station can accommodate the terminal under control when adaptive modulation is implemented, comprising:
a bandwidth information notifier that exchanges information on unoccupied bandwidth in the allocatable bandwidth to the terminal under control, with neighboring base stations; and,
a candidate selector that, when the base station is the originating base station of the terminal under control, predicts whether the terminal under control is determined as being unaccommodatable by each neighboring base station, based on the unoccupied bandwidth of the neighboring base station, and excludes the neighboring base station that was predicted to be determined as being unable to accommodate the terminals under control, from among the candidates of target base stations of the terminal under control.

5. The base station according to Claim 4, further comprising:
a radio information collector that, when the base station is the originating base station of the terminal under control, collects radio information on the quality of radio communication between the terminal under control and the neighboring base stations, from the terminal under control; and
an estimator that, when the base station is the originating base station of the terminal under control, estimates for each neighboring base station the combination of a modulation scheme and a coding rate when the neighboring base station will be the target base station of the terminal under control, based on the radio information on the neighboring base station, and,
the candidate selector, when a neighboring base station will be the target base station of the terminal under control, performs the prediction on the assumption that adaptive modulation will be performed by the combination estimated by the estimator, in the neighboring base station.

6. The base station according to Claim 4 or 5, wherein the radio information collector collects as the radio information, information on CINR and RSSI of the signal which the terminal under control received from neighboring base stations, from the terminal under control.

7. A radio communication method based on a base station which, at the time of handover of a terminal under control which, among terminals, belongs to a QoS class that needs bandwidth guarantee, performs, when the base station is the target base station of the terminal under control, admission control of determining whether the base station can accommodate the terminal under control when adaptive modulation is implemented, comprising:
a bandwidth information notifying step of exchanging information on unoccupied bandwidth in the allocatable bandwidth to the terminal under control, with neighboring base stations; and,
a candidate selecting step of, when the base station is the originating base station of the terminal under control, predicts whether the terminal under control is determined as being unaccommodatable by each neighboring base station, based on the unoccupied bandwidth of the neighboring base station, leaving out the neighboring base station that was predicted to be determined as being unable to accommodate the terminal under control, from among the candidates of target base stations of the terminal under control.

8. The radio communication method according to Claim 7, comprising:
a radio information collecting step of, when the base station is the originating base station of the terminal under control, collecting radio information on the quality of radio communication between the terminal under control and the neighboring base stations, from the terminal under control; and
an estimating step of, when the base station is the originating base station of the terminal under control, estimating for each neighboring base station the combination of a modulation scheme and a coding rate when the neighboring base station will be the target base station of the terminal under control, based on the radio information on the neighboring base station, and,
in the candidate selecting step, when a neighboring base station will be the target base station of the terminal under control, the prediction is performed on the assumption that adaptive modulation will be performed by the combination estimated by the estimator, in the neighboring base station.

9. The radio communication method according to Claim 7 or 8, wherein in the radio information collecting step, information on CINR and RSSI of the signal which the terminal under control received from neighboring base stations is collected as the radio information, from the terminal under control.
